(19) Europäisches Patentamt
European Patent Office
Office européen des brevets

(11) EP 2 917 529 B1

(12) FASCICULE DE BREVET EUROPEEN

(45) Date de publication et mention de la délivrance du brevet:
**12.04.2017 Bulletin 2017/15**

(21) Numéro de dépôt: **13795820.3**

(22) Date de dépôt: **22.10.2013**

(51) Int Cl.:
*F01N 3/20* (2006.01)      *F01N 3/08* (2006.01)
*F01N 13/02* (2010.01)      *F01N 9/00* (2006.01)

(86) Numéro de dépôt international:
**PCT/FR2013/052520**

(87) Numéro de publication internationale:
**WO 2014/072607 (15.05.2014 Gazette 2014/20)**

(54) **DISPOSITIF DE DÉPOLLUTION DE GAZ D'ÉCHAPPEMENT AVEC INJECTION D'AGENT RÉDUCTEUR MAÎTRISÉE**

ABGASREINIGUNGSVORRICHTUNG MIT GESTEUERTER REDUKTIONSMITTELEINSPRITZUNG

EXHAUST GAS PURIFICATION DEVICE WITH CONTROLLED INJECTION OF REDUCING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2012 FR 1260730**

(43) Date de publication de la demande:
**16.09.2015 Bulletin 2015/38**

(73) Titulaire: **Peugeot Citroën Automobiles SA 78140 Vélizy Villacoublay (FR)**

(72) Inventeurs:
• **CREHAN, Gabriel**
  **92420 Vaucresson (FR)**
• **BIZET, Charles**
  **62000 ARRAS (FR)**
• **GENIN, Frederic**
  **94460 Valenton (FR)**
• **MOUGAMADOU, Nicolas**
  **75020 Paris (FR)**

(56) Documents cités:
**US-A1- 2005 091 968      US-A1- 2006 010 857
US-A1- 2009 173 064      US-A1- 2011 083 427**

## Description

L'invention concerne les moteurs à combustion, et plus particulièrement les moteurs à combustion équipés d'un catalyseur de réduction catalytique sélective.

Les faibles niveaux d'oxydes d'azote à la sortie de l'échappement requis par les législations actuelles impliquent l'adoption de dispositifs de dépollution dont le rôle est de réduire les oxydes d'azote, ou dispositifs dits « déNOx ».

Une solution consiste à utiliser un catalyseur de réduction catalytique sélective ou SCR pour « Selective Catalytic Reducer » en anglais, lequel détruit les oxydes d'azote en les faisant réagir avec un agent réducteur, par exemple $NH_3$, lequel est injecté directement dans la ligne d'échappement. Le $NH_3$ est stocké dans un revêtement déNOx catalytique de type poreux. Lorsque la température devient supérieure à typiquement 150°C, le $NH_3$ absorbé réagit avec les oxydes d'azote $NO_x$ in situ et est transformé en azote $N_2$ et en eau $H_2O$.

Typiquement un catalyseur d'oxydation diesel, ou DOC, pour « Diesel Oxydation Catalyst» en anglais est placé en amont pour assurer un rapport optimum $NO_2/NO_x$ lequel permet une réaction de réduction plus rapide à des températures basses.

On a également ajouté une fonction de stockage de NOx au DOC afin de piéger et stocker les oxydes d'azote quand le catalyseur de réduction catalytique sélective n'est pas catalytiquement actif. Quand la température augmente dans l'échappement les NOx sont thermiquement désorbés du catalyseur d'oxydation DOC à partir de typiquement 250°C lorsque le catalyseur de réduction catalytique sélective devint actif, typiquement à partir de 150°C, de manière à réagir avec le $NH_3$ stocké dans le revêtement du catalyseur de réduction catalytique sélective déNOx.

De tels dispositifs de stockage de NOx, placés dans un DOC ou non, sont souvent appelés absorbeur ou accumulateur passif de NOx ou PNA pour << Passive NOx Adsorber >> selon la terminologie anglo-saxonne.

Un tel dispositif est connu de la publication WO 2011/0083427 A.

L'injection de $NH_3$ est contrôlée en visant un niveau de $NH_3$ stocké dans le revêtement déNOx du SCR qui évolue en pratique alors qu'il est consommé par les NOx.

Jusqu'à présent la quantité de NOx entrant dans le SCR est considérée comme égale aux émissions du bloc moteur. On place typiquement une sonde NOx en aval du catalyseur de réduction catalytique sélective laquelle mesure le niveau de NOx en sortie du pot d'échappement. La différence entre le niveau de NOx en sortie du bloc moteur et en sortie du pot d'échappement correspond à un niveau de $NH_3$ consommé et ainsi une injection de $NH_3$ est mise en oeuvre pour restaurer le $NH_3$ considéré comme consommé dans le catalyseur de réduction catalytique sélective.

Un problème apparait lorsque l'on fait usage d'un PNA de stockage de NOx dans le DOC. Aux basses températures, le niveau de NOx à la sortie du pot d'échappement est artificiellement inférieur aux émissions du bloc moteur et on obtient ainsi une fausse valeur de niveau de $NH_3$ consommé dans le revêtement de nettoyage déNOx du catalyseur de réduction catalytique sélective.

Il existe alors un risque de sur-injection ou de sous-injection de NH3. Si l'on met en oeuvre une sur-injection de $NH_3$ alors le revêtement de nettoyage du catalyseur de réduction catalytique sélective se sature en $NH_3$ et le $NH_3$ est dégagé par le pot d'échappement causant en d'autres termes une fuite de $NH_3$. Une telle perte de NH3 va diminuer l'autonomie du réservoir de réducteur. D'autre part le $NH_3$ est un gaz odorant et fait partie des gaz à effet de serre. Les fuites de $NH_3$ doivent être réduites au maximum.

Par ailleurs, si l'on met en oeuvre une sous-injection de $NH_3$, alors le dispositif de dépollution ne fonctionne plus correctement, délivrant notamment un résultat erroné à un système de diagnostique embarqué ou OBD pour « On Board Diagnostics » selon la terminologie anglo-saxonne

L'invention vise une meilleure prise en compte des oxydes d'azote stockés dans le PNA en amont du catalyseur de réduction catalytique sélective pour gérer de manière plus fine l'injection d'agent réducteur dans le SCR de manière à éviter à la fois les fuites d'agent réducteur dans l'atmosphère et les diagnostics embarqués erronés.

Ce but est atteint selon l'invention grâce à un dispositif de dépollution de gaz d'échappement de véhicule automobile, comprenant un catalyseur de réduction catalytique sélective, un absorbeur d'oxydes d'azote disposé en amont du catalyseur de réduction catalytique sélective, et un contrôleur d'injection d'agent réducteur d'oxydes d'azote dans le catalyseur de réduction catalytique sélective, où le contrôleur est configuré pour mettre en oeuvre les étapes suivantes : appliquer un modèle de calcul délivrant une valeur indicatrice d'une vitesse de stockage d'oxydes d'azote dans l'absorbeur d'oxydes d'azote, utiliser la valeur indicatrice d'une vitesse de stockage d'oxydes d'azote pour obtenir une valeur indicatrice d'une vitesse de réduction d'oxydes d'azote dans le catalyseur de réduction catalytique sélective, déterminer un débit d'injection nécessaire d'agent réducteur dans le catalyseur de réduction catalytique sélective pour maintenir une quantité d'agent réducteur présent dans le catalyseur de réduction catalytique sélective en présence de la vitesse de réduction d'oxydes d'azote indiquée par la valeur indicatrice d'une vitesse de réduction d'oxydes d'azote ainsi obtenue, et piloter une injection d'agent réducteur d'oxydes d'azote dans le catalyseur de réduction catalytique sélective selon le débit d'injection ainsi déterminé.

Avantageusement, le dispositif est configuré pour mettre en oeuvre un modèle de calcul délivrant une valeur indicatrice de la vitesse de stockage d'oxydes d'azote dans l'absorbeur d'oxydes d'azote lequel modèle comprend un membre indiquant un taux de désorption qui est de la forme : Taux de désorption = $K_{des, NOx}$ * $[\theta NOx]$ où $K_{des, NOx} = A_{des,NOx}$ * exp $(-E_{des,NOx}$ * $[\theta NOx]$ / R*Ts), $A_{des,NOx}$ étant une constante, $E_{des,NOx}$ étant une valeur d'énergie d'activation de désorption, $[\theta NOx]$ étant une concentration d'oxydes d'azote en surface dans l'absorbeur d'oxydes d'azote, R étant la constante des gaz, et Ts une température en surface dans l'absorbeur d'oxydes d'azote.

Avantageusement, le dispositif est configuré pour mettre en oeuvre un modèle de calcul délivrant une valeur indicatrice de la vitesse de stockage d'oxydes d'azote dans l'absorbeur d'oxydes d'azote lequel modèle comprend un membre indiquant un taux d'absorption de la forme : Taux d'absorption = $K_{ads, NOx}$ * $[NOx]$ * $(1-\theta_{NOx})$ où $K_{ads, NOx} = A_{ads,NOx}$ * exp $(-E_{ads,NOx}$ / R*Ts), $[NOx]$ étant une concentration en oxydes d'azote dans les gaz d'échappement, $\theta_{NOx}$ étant une valeur d'étendue de surface de sorption pour les oxydes d'azote dans l'absorbeur d'oxydes d'azote, $A_{ads,NOx}$ étant une constante, $E_{ads,NOx}$ étant une valeur d'énergie d'activation pour l'absorption, R étant la constante des gaz, et Ts étant une température en surface dans l'absorbeur d'oxydes d'azote.

Avantageusement, le dispositif est configuré pour mettre en oeuvre un modèle délivrant une valeur indicatrice d'une vitesse de stockage d'oxydes d'azote sous la forme d'une valeur estimée de concentration des gaz d'échappement en oxydes d'azote en sortie de l'absorbeur d'oxydes d'azote, lequel modèle est de la forme : [NOx sortie absorbeur] = [NOx sortie bloc moteur] * Débit d'air * Température absorbeur (Ts) * (Taux de désorption - Taux d'absorption) où [NOx sortie absorbeur] est une valeur de concentration en oxydes d'azote dans les gaz d'échappement en sortie de l'absorbeur, [NOx sortie bloc moteur] est une valeur de concentration en oxydes d'azote dans les gaz d'échappement en sortie d'un bloc moteur, Débit d'air est une valeur de débit de gaz d'échappement en sortie de l'absorbeur, et Température absorbeur (Ts) est une valeur de température en surface dans l'absorbeur.

Avantageusement, le dispositif est configuré pour calculer un taux de réaction des oxydes d'azote avec l'agent réducteur dans le catalyseur de réduction catalytique sélective en mettant en oeuvre un modèle de la forme : R = K (T) * [NOX sortie absorbeur] * [NH3 stocké dans le SCR] * (débit de gaz d'échappement), où R est le taux de réaction des oxydes d'azote avec l'agent réducteur, K(T) est un coefficient de taux de réaction dépendant d'une température des gaz d'échappement, [NOX sortie absorbeur] est une concentration en NOx dans les gaz d'échappement en sortie de l'absorbeur, [NH3 stocké dans le SCR] est une valeur de concentration en surface dans le catalyseur de réduction catalytique sélective, et T est une température des gaz d'échappement.

Avantageusement, l'absorbeur d'oxydes d'azote est de type à monolithe.

Avantageusement, l'absorbeur d'oxydes d'azote est placé dans un catalyseur d'oxydation diesel.

Avantageusement, le catalyseur de réduction catalytique sélective est disposé dans un filtre à particules.

Avantageusement, le dispositif est configuré pour mettre en oeuvre un modèle d'estimation de quantité d'oxydes d'azote émis par un bloc moteur.

L'invention concerne également un moteur à combustion de véhicule automobile, comprenant un tel dispositif de dépollution de gaz d'échappement.

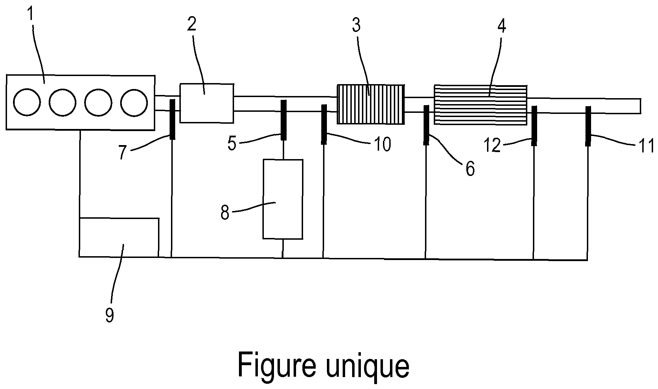

D'autres caractéristiques, buts et avantages de l'invention apparaitront à la lecture de la description détaillée qui va suivre, faite en référence à la figure unique annexée, qui est un schéma fonctionnel représentant un dispositif de réduction d'oxydes d'azote selon un mode de réalisation de l'invention.

Le dispositif de réduction d'oxydes d'azote représenté sur la figure annexée est disposé en sortie d'un bloc moteur 1 de type diesel. Il comprend un catalyseur d'oxydation 2 contenant un matériau passif d'absorption des oxydes d'azote. Il comprend également un catalyseur de réduction catalytique sélective déNOx 3 et un filtre à particules 4. Le catalyseur de réduction catalytique sélective 3 est alimenté par un injecteur d'urée 5.

Le dispositif comporte en outre une sonde de pression 6 placée en entrée du filtre à particules 4, et un capteur d'oxydes d'azote 7 placé entre le bloc moteur 1 et le catalyseur d'oxydation 2.

Un réservoir 8 d'agent réducteur alimente l'injecteur d'urée 5. En outre, un processeur 9 de diagnostic embarqué est disposé en connexion notamment avec le réservoir d'urée 8, avec la sonde de pression 6, avec le détecteur de NOx 7, avec un thermocouple 10 placé entre le catalyseur d'oxydation 2 et le catalyseur de réduction catalytique sélective 3, ainsi qu'avec une sonde de pression 11 et un détecteur d'oxydes d'azote 12 placés en sortie du dispositif.

Le catalyseur d'oxydation diesel 2 contenant le matériau d'absorption des oxydes d'azote est donc placé en amont du catalyseur de réduction catalytique sélective 3 lequel inclut ici un monolithe imprégné et lequel se trouve lui-même en amont du filtre à particules 4. Le catalyseur d'oxydation diesel 2 contient donc les matériaux de piégeage des oxydes d'azote, et est suivi par un catalyseur de réduction catalytique sélective déNOx 3 sur un monolithe. En variante le catalyseur de réduction catalytique sélective déNOx sur monolithe est remplacé par un filtre à particules imprégné d'un catalyseur de réduction catalytique sélective déNOx. Le catalyseur SCR peut Egalement, être placé en aval du filtre à particules.

Les capteurs d'oxydes d'azote sont préférentiellement placés en amont ou en aval du catalyseur d'oxydation 2, et donc en amont et aval ici d'un monolithe d'accumulateur d'oxydes d'azote passif PNA contenu dans le catalyseur d'oxydation 2. En variante, un seul capteur d'oxydes d'azote est utilisé, afin de réduire les coûts en aval du catalyseur de réduction catalytique sélective 3. Le revêtement de nettoyage, qui est ici celui d'un monolithe de catalyseur de réduction catalytique sélective 3, peut en variante avoir une formulation différente. Il est également possible que le PNA soit extrudé en un monolithe ayant un structure de filtration.

Le bloc moteur 1, essence ou diesel ou des variations de type moteur hybride, peut être utilisé selon une quelconque stratégie de combustion. Le moteur fonctionne totalement ou partiellement en conditions pauvres de manière à disposer typiquement un catalyseur de réduction catalytique sélective déNOX sur la ligne d'échappement.

Le processeur embarqué 9 gère, outre le diagnostic embarqué, également la stratégie d'injection d'agent réducteur. Un quelconque agent réducteur à introduire dans la ligne d'échappement peut être utilisé pour réduire les polluants de type NOx par l'intermédiaire du catalyseur de réduction catalytique sélective 3. Des exemples typiques comprennent : CO, HC, alcools, glycols, les esters de glycérol, des acides, l'ammoniac, l'hydroxyde d'ammonium, les formates d'ammonium, l'urée, la guanidine, les sels de guanidine, les hydrocarbures, l'hydrogène, etc...

On va décrire maintenant un procédé de gestion du dispositif d'injection d'agent réducteur utilisant un modèle d'estimation d'émissions d'oxydes d'azote par le bloc moteur 1, un modèle de sorption d'oxydes d"azote dans le PNA, un modèle de réduction de NOx, et un modèle d'injection d'agent réducteur pour maintenir à un niveau souhaité le $NH_3$ stocké dans le revêtement de nettoyage du catalyseur de réduction catalytique sélective 3.

Les séquences d'estimation décrites maintenant font partie d'un modèle d'ensemble permettant de prendre correctement en compte les phénomènes de sorption du PNA et ses impacts sur la consommation d'agent réducteur et sur l'injection de ce dernier.

Dans cet exemple de réalisation, le produit réducteur injecté est de l'Adblue, marque déposée, et $NH_3$ est la molécule d'agent réducteur qui est stockée dans le catalyseur de réduction catalytique sélective déNOx 3 et qui réagit avec les oxydes d'azote. Dans cet exemple, la quantité de NOx stockée dans le PNA va donc évoluer.

Le premier module du présent modèle d'ensemble est une modèle d'estimation de quantité d'oxydes d'azote émis par le bloc moteur 1, lequel modèle est basé sur des tables dépendant des paramètres moteurs qui sont ici le couple, le régime, la température de liquide de refroidissement moteur, la vitesse du véhicule. D'autres paramètres peuvent être pris en compte dans ce modèle. Les modèles de ce type sont bien connus. En variante, une sonde de NOx peut être utilisée. Ce sont principalement les molécules NO2 émises par le bloc moteur 1 qui sont piégées par le matériau de stockage du PNA. Ainsi la connaissance des niveaux du ratio $NO_2/NOx$ est utile pour la précision du modèle.

Les émissions de NOx du bloc moteur 1 et les ratios $NO_2/NOx$ peuvent être exprimés de différentes façons, par exemple sous la forme d'une équation polynomiale, d'une table de données, d'une formule de réaction chimique avec des constantes calibrées. En variante, une sonde à NOx peut être utilisée.

Le second module est un modèle indiquant la quantité de NOx stockés dans le PNA. Ce modèle est ici divisé en deux sous-modèles qui sont respectivement un modèle d'absorption de NOx, et un modèle de désorption de NOx. Ces deux sous modèles sont suivis par un modèle de bilan aval au PNA.

Le modèle d'absorption de NOx est ici le suivant :

$$\text{Taux d'absorption de NOx} = K_{ads, NOx} * [NOx] * (1 - \theta_{NOx})$$

Où $K_{ads, NOx} = A_{ads, NOx} * \exp(-E_{adS, NOx}/R*Ts)$

Où $A_{ads, NOx}$ est un facteur pré-exponentiel, $E_{ads, NOx}$ est une valeur d'énergie d'activation pour l'absorption, R est la constante des gaz, et Ts est la température de surface dans le PNA. [NOx] est la concentration en NOx dans les gaz d'échappement en sortie du bloc moteur, et $\theta_{NOx}$ est l'étendue de la surface de sorption pour les espèces de type oxydes d'azote.

Le modèle de désorption est ici le suivant :

$$\text{Taux de désorption} = K_{des, NOx} * [\theta NOx]$$

Où $K_{des, NOx} = A_{des, NOx} * \exp(-E_{des, NOx} * [\theta NOx] / R*Ts)$

Où $A_{des, NOx}$ est un facteur pré-exponentiel, $E_{des, NOx}$ est la valeur de l'énergie d'activation de désorption, et $[\theta NOx]$ est la concentration en NOx en surface dans le PNA. Toutefois en variante les NOx peuvent être stockés dans la phase cristalline plutôt qu'en surface proprement dite.

Le modèle de bilan en sortie du PNA est ici le suivant :

$$[NOx \text{ sortie PNA}] = [NOx \text{ sortie bloc moteur}] * \text{débit d'air} * \text{Température PNA (Ts)} *$$

$$(\text{Taux de désorption NOx} - \text{Taux d'absorption NOx})$$

Où [NOx sortie PNA] est la concentration en NOx dans les gaz d'échappement en sortie du PNA et [NOx sortie bloc moteur] est la concentration en NOx dans les gaz d'échappement en sortie du bloc moteur.

En ce qui concerne le modèle d'estimation de taux de réduction des oxydes d'azote et de consommation de $NH_3$, le taux de réaction avec le $NH_3$ stocké pour la consommation de NOx en sortie du PNA dans le revêtement du catalyseur de réduction catalytique sélective est ici exprimé par le modèle suivant :

$$R = K (T) * [NOX \text{ sortie PNA}] * [NH_3 \text{ stocké dans le SCR}] * (\text{débit de gaz d'échappement})$$

Où R est le taux de réaction, K(T) est le coefficient de taux de réaction ou constante de taux, [NOX sortie PNA] est la concentration en NOx dans les gaz d'échappement en sortie du PNA, [$NH_3$ stocké dans le SCR] est la concentration en surface dans le matériau catalytique poreux du catalyseur de réduction catalytique sélective 3, et T est la température des gaz d'échappement, considérée comme égale à la température de surface du matériau catalytique du catalyseur de réduction catalytique sélective 3.

Le modèle d'injection d'agent réducteur est quant à lui considéré ici comme correspondant au $NH_3$ consommé par les oxydes d'azote sortant du PNA et équivaut au nouveau niveau cible d'injection de l'agent de réduction.

Le niveau cible de stockage de $NH_3$ dans le revêtement de nettoyage du SCR est donné quant à lui par un modèle qui est fonction de la température et d'un taux de débit.

Ainsi, ce niveau cible est ici donné par :

$$\text{Niveau cible d'injection d'agent réducteur} = (NH_3 \text{ stocké dans le SCR } f(T, \text{ taux de débit d'agent réducteur})) + (NH_3 \text{ consommé par le NOX en sortie du PNA})$$

Finalement une fois que le niveau réel de $NH_3$ consommé est déterminé, un débit plus précis d'agent réducteur est injecté dans la ligne d'échappement pour être décomposé en $N_2$ et $H_2O$ et pour être restauré dans le revêtement de nettoyage du catalyseur de réduction catalytique sélective.

Ces différents modèles sont mis en oeuvre dans le processeur 9 lequel établit de manière calculatoire les différentes valeurs délivrées par ces modèles et en particulier la quantité de NOx accumulée dans le PNA, permettant ainsi de corriger l'estimation ou la mesure de la quantité d'agent réducteur consommée par les NOx passant dans le catalyseur de réduction catalytique sélective. Par une telle utilisation d'un modèle calculatoire d'estimation de la quantité de NOx stockée, la gestion de la quantité de NH3 injectée s'en trouve affinée.

Grâce à un tel dispositif, moins de $NH_3$ est gaspillé en contrôlant mieux le niveau réel de $NH_3$ disponible dans le revêtement de nettoyage de réduction des oxydes d'azote. Le risque de fuite de $NH_3$ est diminué, lequel $NH_3$ est odorant et contribue à l'effet de serre. L'autonomie du réservoir d'agent réducteur est optimisée, prolongeant ainsi les intervalles de réapprovisionnement du réservoir. Le fait d'éviter une sous-injection permet également de réduire de fausses lectures positives par le système de diagnostic embarqué qui sont très intrusives et très coûteuses pour le client. Le dispositif permet donc une optimisation de la réduction des oxydes d'azote par un meilleur contrôle de l'injection d'agent réducteur, évitant une sur-injection ou une sous-injection.

Un tel modèle présente l'avantage de pouvoir être directement implémenté dans un système logique de gestion de réduction des oxydes d'azote et de permettre de déterminer plus précisément la quantité exacte de $NH_3$ consommée dans le catalyseur de réduction catalytique sélective des oxydes d'azote sans nécessiter de placer une sonde à oxydes d'azote en sortie du PNA, laquelle sonde présente un coût beaucoup plus élevé que la mise en place d'un tel modèle. Ainsi un contrôle plus réaliste de l'injection d'agent réducteur dans la ligne d'échappement est réalisé.

## Revendications

**1.** Dispositif de dépollution de gaz d'échappement de véhicule automobile, comprenant un catalyseur de réduction catalytique sélective (3), un absorbeur d'oxydes d'azote (2) disposé en amont du catalyseur de réduction catalytique sélective (3), et un contrôleur (9) d'injection d'agent réducteur d'oxydes d'azote dans le catalyseur de réduction catalytique sélective (3), **caractérisé en ce que** le contrôleur (9) est configuré pour mettre en oeuvre les étapes suivantes :

- appliquer un modèle de calcul délivrant une valeur indicatrice d'une vitesse de stockage d'oxydes d'azote dans l'absorbeur d'oxydes d'azote (2),
- utiliser la valeur indicatrice d'une vitesse de stockage d'oxydes d'azote pour obtenir une valeur indicatrice d'une vitesse de réduction d'oxydes d'azote dans le catalyseur de réduction catalytique sélective (3),

- déterminer un débit d'injection nécessaire d'agent réducteur dans le catalyseur de réduction catalytique sélective (3) pour maintenir une quantité d'agent réducteur présent dans le catalyseur de réduction catalytique sélective (3) en présence de la vitesse de réduction d'oxydes d'azote indiquée par la valeur indicatrice d'une vitesse de réduction d'oxydes d'azote ainsi obtenue, et,

- piloter une injection d'agent réducteur d'oxydes d'azote dans le catalyseur de réduction catalytique sélective (3) selon le débit d'injection ainsi déterminé.

2. Dispositif de dépollution de gaz d'échappement de véhicule automobile selon la revendication 1, **caractérisé en ce qu'**il est configuré pour mettre en oeuvre un modèle de calcul délivrant une valeur indicatrice de la vitesse de stockage d'oxydes d'azote dans l'absorbeur d'oxydes d'azote (2) lequel modèle comprend un membre indiquant un taux de désorption qui est de la forme :

$$\text{Taux de désorption} = K_{des, NOx} * [\theta NOx]$$

où $K_{des, NOx} = A_{des,NOx} * \exp(-E_{des,NOx} * [\theta NOx] / R*Ts)$,
$A_{des,NOx}$ étant une constante, $E_{des,NOx}$ étant une valeur d'énergie d'activation de désorption, $[\theta NOx]$ étant une concentration d'oxydes d'azote en surface dans l'absorbeur d'oxydes d'azote (2), R étant la constante des gaz, et Ts une température en surface dans l'absorbeur d'oxydes d'azote (2).

3. Dispositif de dépollution de gaz d'échappement de véhicule automobile selon la revendication 1 ou la revendication 2, **caractérisé en ce qu'**il est configuré pour mettre en oeuvre un modèle de calcul délivrant une valeur indicatrice de la vitesse de stockage d'oxydes d'azote dans l'absorbeur d'oxydes d'azote (2) lequel modèle comprend un membre indiquant un taux d'absorption de la forme :

$$\text{Taux d'absorption} = K_{ads, NOx} * [NOx] * (1-\theta_{NOx})$$

où $K_{ads,NOx} = A_{ads,NOx} * \exp(-E_{ads,NOx} / R*Ts)$,
$[NOx]$ étant une concentration en oxydes d'azote dans les gaz d'échappement, $\theta_{NOx}$ étant une valeur d'étendue de surface de sorption pour les oxydes d'azote dans l'absorbeur d'oxydes d'azote (2), $A_{ads,NOx}$ étant une constante, $E_{ads,NOx}$ étant une valeur d'énergie d'activation pour l'absorption, R étant la constante des gaz, et Ts étant une température en surface dans l'absorbeur d'oxydes d'azote (2).

4. Dispositif de dépollution de gaz d'échappement de véhicule automobile selon la revendication 2 en combinaison avec la revendication 3, **caractérisé en ce qu'**il est configuré pour mettre en oeuvre un modèle délivrant une valeur indicatrice d'une vitesse de stockage d'oxydes d'azote sous la forme d'une valeur estimée de concentration des gaz d'échappement en oxydes d'azote en sortie de l'absorbeur d'oxydes d'azote (2), lequel modèle est de la forme :

$$[\text{NOx sortie absorbeur}] = [\text{NOx sortie bloc moteur}] * \text{Débit d'air} * \text{Température absorbeur (Ts)} * (\text{Taux de désorption} - \text{Taux d'absorption})$$

où [NOx sortie absorbeur] est une valeur de concentration en oxydes d'azote dans les gaz d'échappement en sortie de l'absorbeur (2), [NOx sortie bloc moteur] est une valeur de concentration en oxydes d'azote dans les gaz d'échappement en sortie d'un bloc moteur (1), Débit d'air est une valeur de débit de gaz d'échappement en sortie de l'absorbeur (2), et Température absorbeur (Ts) est une valeur de température en surface dans l'absorbeur (2).

5. Dispositif de dépollution de gaz d'échappement de véhicule automobile selon l'une quelconque des revendications précédentes, **caractérisé en ce qu'**il est configuré pour calculer un taux de réaction des oxydes d'azote avec l'agent réducteur dans le catalyseur de réduction catalytique sélective (3) en mettant en oeuvre un modèle de la forme : R = K (T) * [NOX sortie absorbeur] * [NH₃ stocké dans le SCR] * (débit de gaz d'échappement), où R est le taux de réaction des oxydes d'azote avec l'agent réducteur, K(T) est un coefficient de taux de réaction dépendant d'une température des gaz d'échappement, [NOX sortie absorbeur] est une concentration en NOx dans les gaz d'échappement en sortie de l'absorbeur (2), [NH₃ stocké dans le SCR] est une valeur de concentration en surface dans le catalyseur de réduction catalytique sélective (3), et T est une température des gaz d'échappement.

**6.** Dispositif de dépollution de gaz d'échappement de véhicule automobile selon l'une quelconque des revendications précédentes, **caractérisé en ce que** l'absorbeur d'oxydes d'azote (2) est de type à monolithe.

**7.** Dispositif de dépollution de gaz d'échappement de véhicule automobile selon l'une quelconque des revendications précédentes, **caractérisé en ce que** l'absorbeur d'oxydes d'azote (2) est placé dans un catalyseur d'oxydation diesel (2).

**8.** Dispositif de dépollution de gaz d'échappement de véhicule automobile selon l'une quelconque des revendications précédentes, **caractérisé en ce que** le catalyseur de réduction catalytique sélective (3) est disposé dans un filtre à particules.

**9.** Dispositif de dépollution de gaz d'échappement de véhicule automobile selon l'une quelconque des revendications précédentes, **caractérisé en ce qu'**il est configuré pour mettre en oeuvre un modèle d'estimation de quantité d'oxydes d'azote émis par un bloc moteur (1).

**10.** Moteur à combustion de véhicule automobile (1,2,3,9), **caractérisé en ce qu'**il comprend un dispositif de dépollution (2,3,9) de gaz d'échappement selon l'une quelconque des revendications précédentes.

**Patentansprüche**

**1.** Abgasreinigungsvorrichtung für Kraftfahrzeug die einen Katalysator mit selektiver katalytischer Reduktion (3), einen Stickstoffoxidabsorber (2), der stromaufwärts des Katalysators mit selektiver katalytischer Reduktion (3) angeordnet ist, und eine Steuervorrichtung (9) zum Einspritzen von Stickstoffoxidreduktionsmittel in den Katalysator mit selektiver katalytischer Reduktion (3) umfasst, **dadurch gekennzeichnet, dass** die Steuervorrichtung (9) konfiguriert ist, um die folgenden Schritte umzusetzen:

- Anwenden eines Rechenmodells, das einen Wert liefert, der auf eine Lagergeschwindigkeit von Stickstoffoxiden in dem Stickstoffoxidabsorber (2) hinweist,
- Verwenden des Werts, der auf eine Lagergeschwindigkeit von Stickstoffoxiden hinweist, um einen Wert zu erhalten, der auf eine Reduktionsgeschwindigkeit von Stickstoffoxiden in dem Katalysator mit selektiver katalytischer Reduktion (3) hinweist,
- Bestimmen eines erforderlichen Einspritzdurchsatzes an Reduktionsmittel in den Katalysator mit selektiver katalytischer Reduktion (3), um eine Menge an Reduktionsmittel aufrecht zu erhalten, die in dem Katalysator mit selektiver katalytischer Reduktion (3) bei Gegenwart der Reduktionsgeschwindigkeit an Stickstoffoxiden, die von dem Wert angegeben wird, der auf eine Reduktionsgeschwindigkeit an Stickstoffoxiden, der so erhalten wird, hinweist, vorhanden ist, und
- Steuern einer Einspritzung von Stickstoffoxidreduktionsmittel in den Katalysator mit selektiver katalytischer Reduktion (3) gemäß dem derart bestimmten Einspritzdurchsatz.

**2.** Abgasreinigungsvorrichtung für Kraftfahrzeug nach Anspruch 1, **dadurch gekennzeichnet, dass** sie konfiguriert ist, um ein Rechenmodell umzusetzen, das einen Wert liefert, der auf die Lagergeschwindigkeit von Stickstoffoxiden in dem Stickstoffoxidabsorber (2) hinweist, wobei das Modell ein Glied umfasst, das auf eine Desorptionsrate hinweist, das die folgende Form hat:

$$Desorptionsrate = K_{des,NOx} * [\theta NOx]$$

wobei $K_{des,Nox} = A_{des,Nox} * \exp(-E_{des,Nox} * [\theta NOx]/R*Ts)$,
wobei $A_{des,NOx}$ eine Konstante ist, $E_{des,Nox}$ ein Wert von Desorptionsaktivierungsenergie ist, $[\theta NOx]$ eine Konzentration an Stickstoffoxiden auf der Oberfläche in dem Stickstoffoxidabsorber (2) ist, R die Gaskonstante ist und Ts eine Temperatur auf der Oberfläche in dem Stickstoffoxidabsorber (2) ist.

**3.** Abgasreinigungsvorrichtung für Kraftfahrzeug nach Anspruch 1 oder Anspruch 2, **dadurch gekennzeichnet, dass** sie konfiguriert ist, um ein Rechenmodell umzusetzen, das einen Wert liefert, der auf die Lagergeschwindigkeit von Stickstoffoxiden in dem Stickstoffoxidabsorber (2) hinweist, wobei das Modell ein Glied umfasst, das eine Absorptionsrate angibt, mit der Form:

$$\texttt{Absorptionsrate = K}_{\texttt{ads,NOx}} \texttt{ * [NOx]*(1-}\theta_{\texttt{NOx}}\texttt{)}$$

wobei $K_{ads,NOx} = A_{ads,NOx}$ * exp (-$E_{ads,NOx}$ /R*Ts),

wobei [NOx] eine Konzentration an Stickstoffoxiden in den Abgasen ist, $\theta_{Nox}$ ein Wert der Sorptionsoberflächenausbreitung für die Stickstoffoxide in dem Stickstoffoxidabsorber (2) ist, $A_{ads,Nox}$ eine Konstante ist, $E_{ads,Nox}$ ein Aktivierungswert für die Absorption ist, R die Gaskonstante ist und Ts eine Temperatur auf der Oberfläche des Stickstoffoxidabsorbers (2) ist.

4. Abgasreinigungsvorrichtung für Kraftfahrzeug nach Anspruch 2, kombiniert mit Anspruch 3, **dadurch gekennzeichnet, dass** sie konfiguriert ist, um ein Modell umzusetzen, das einen Wert liefert, der auf eine Lagergeschwindigkeit von Stickstoffoxiden in der Form eines Schätzungswerts der Stickstoffoxidkonzentration der Abgase am Ausgang des Stickstoffoxidabsorbers (2) ist, wobei das Modell die folgende Form hat:

$$\texttt{[Nox Absorberausgang] = [NOx Motorblockausgang] *}$$
$$\texttt{Luftdurchsatz * Absorbertemperatur (Ts) *}$$
$$\texttt{(Desorptionsrate - Absorptionsrate),}$$

wobei [NOx Absorberausgang] ein StickstoffoxidKonzentrationswert in den Abgasen am Ausgang des Absorbers (2) ist, [NOx Motorblockausgang] ein Stickstoffoxidkonzentrationswert in den Abgasen am Ausgang eines Motorblocks (1) ist, Luftdurchsatz ein Durchsatzwert an Abgasen am Ausgang des Absorbers (2) ist, und Absorbertemperatur (Ts) ein Temperaturwert an der Oberfläche in dem Absorber (2) ist.

5. Abgasreinigungsvorrichtung für Kraftfahrzeug nach einem der vorhergehenden Ansprüche, **dadurch gekennzeichnet, dass** sie konfiguriert ist, um eine Reaktionsrate der Stickstoffoxide mit dem Reduktionsmittel in dem Katalysator mit selektiver katalytischer Reduktion (3) zu berechnen, indem ein Modell mit folgender Form umgesetzt wird: R = K (T) *[NOx Absorberausgang]*[$NH_3$ in dem SCR gelagert]*(Abgasdurchsatz), wobei R die Reaktionsrate der Stickstoffoxide mit dem Reduktionsmittel ist, K(T) ein Reaktionsratenkoeffizient ist, der von einer Temperatur der Abgase abhängt, [NOx Absorberausgang] eine NOx-Konzentration in den Abgasen am Ausgang des Absorbers (2) ist, [$NH_3$ in dem SCR gelagert] ein Konzentrationswert an der Oberfläche in dem Katalysator mit selektiver katalytischer Reduktion (3) ist, und T eine Temperatur der Abgase ist.

6. Abgasreinigungsvorrichtung für Kraftfahrzeug nach einem der vorhergehenden Ansprüche, **dadurch gekennzeichnet, dass** der Stickstoffoxidabsorber (2) des Typs mit Monolith ist.

7. Abgasreinigungsvorrichtung für Kraftfahrzeug nach einem der vorhergehenden Ansprüche, **dadurch gekennzeichnet, dass** der Stickstoffoxidabsorber (2) in einem Diesel-Oxidationskatalysator (2) platziert ist.

8. Abgasreinigungsvorrichtung für Kraftfahrzeug nach einem der vorhergehenden Ansprüche, **dadurch gekennzeichnet, dass** der Katalysator mit selektiver katalytischer Reduktion (3) in einem Partikelfilter angeordnet ist.

9. Abgasreinigungsvorrichtung für Kraftfahrzeug nach einem der vorhergehenden Ansprüche, **dadurch gekennzeichnet, dass** sie konfiguriert ist, um ein Schätzungsmodell der Menge an Stickstoffoxiden, die von einem Motorblock (1) abgegeben wird, umzusetzen.

10. Kraftfahrzeug-Brennkraftmaschine (1, 2, 3, 9), **dadurch gekennzeichnet, dass** sie eine Abgasreinigungsvorrichtung (2, 3, 9) nach einem der vorhergehenden Ansprüche umfasst.

**Claims**

1. An exhaust gas purification device of a motor vehicle, including a selective catalytic reduction catalyst (3), a nitrogen oxide absorber (2) disposed upstream of the selective catalytic reduction catalyst (3), and an injection controller (9) of reducing agent of nitrogen oxide in the selective catalytic reduction catalyst (3), **characterized in that** the controller (9) is configured to implement the following steps:

- applying a calculation model delivering a value indicative of a speed of storage of nitrogen oxides in the nitrogen oxide absorber (2),
- using the value indicative of a speed of storage of nitrogen oxides to obtain a value indicative of a speed of reduction of nitrogen oxides in the selective catalytic reduction catalyst (3),
- determining a necessary rate of injection of reducing agent in the selective catalytic reduction catalyst (3) to maintain a quantity of reducing agent present in the selective catalytic reduction catalyst (3) in the presence of the speed of reduction of nitrogen oxides indicated by the value indicative of a speed of reduction of nitrogen oxides thus obtained, and,
- controlling an injection of reducing agent of nitrogen oxides in the selective catalytic reduction catalyst (3) according to the rate of injection thus determined.

2. The exhaust gas purification device of a motor vehicle according to Claim 1, **characterized in that** it is configured to implement a calculation model delivering a value indicative of the speed of storage of nitrogen oxides in the absorber (2) of nitrogen oxides, which model includes an element indicating a rate of desorption which is of the form:

$$\text{Rate of desorption} = K_{des,Nox} * [\theta NOx]$$

in which $K_{des,Nox} = A_{des,NOx} * \exp(-E_{des,NOx} * [\theta NOx] / R*Ts)$,
$A_{des,NOx}$ being a constant, $E_{des,NOx}$ being a value of desorption activation energy, $[\theta NOx]$ being a concentration of surface nitrogen oxides in the absorber (2) of nitrogen oxides, R being the constant of the gases, and Ts a surface temperature in the absorber (2) of nitrogen oxides.

3. The exhaust gas purification device of a motor vehicle according to Claim 1 or Claim 2, **characterized in that** it is configured to implement a calculation model delivering a value indicative of the speed of storage of nitrogen oxides in the absorber (2) of nitrogen oxides, which model includes an element indicating a rate of absorption of the form:

$$\text{Rate of absorption} = K_{ads,NOx} * [NOx] * (1-\theta_{NOx})$$

in which $K_{ads,NOx} = A_{ads,NOx} * \exp(-E_{ads,NOx} / R*Ts)$,
[NOx] being a concentration of nitrogen oxides in the exhaust gases, $\theta_{NOx}$ being a value of surface extent of sorption for the nitrogen oxides in the absorber (2) of nitrogen oxides, $A_{ads,NOx}$ being a constant, $E_{ads,NOx}$ being a value of activation energy for the absorption, R being the constant of the gases, and Ts being a surface temperature in the absorber (2) of nitrogen oxides.

4. The exhaust gas purification device of a motor vehicle according to Claim 2 in combination with Claim 3, **characterized in that** it is configured to implement a model delivering a value indicative of a speed of storage of nitrogen oxides in the form of an estimated value of concentration of the exhaust gases of nitrogen oxides at the outlet of the absorber (2) of nitrogen oxides, which model is of the form:

$$[NOx \text{ absorber outlet}] = [NOx \text{ engine block outlet}] * \text{air flow} * \text{Absorber temperature (Ts)} * (\text{Desorption rate} - \text{Absorption rate})$$

in which [NOx absorber outlet] is a value of concentration of nitrogen oxides in the exhaust gases at the outlet of the absorber (2), [NOx engine block outlet) is a value of concentration of nitrogen oxides in the exhaust gases at the outlet of an engine block (1), air flow is a value of flow of exhaust gas at the outlet of the absorber (2), and Absorber temperature (Ts) is a surface temperature value in the absorber (2).

5. The exhaust gas purification device of a motor vehicle according to any one of the preceding claims, **characterized in that** it is configured to calculate a reaction rate of the nitrogen oxides with the reducing agent in the selective catalytic reduction catalyst (3) by implementing a model of the form: $R = K(T)* [NOX \text{ absorber outlet}] * [NH_3 \text{ stored in the SCR}] * (\text{flow of exhaust gas})$, in which R is the rate of reaction of the nitrogen oxides with the reducing agent, K(T) is a coefficient of rate of reaction dependent on a temperature of the exhaust gases, [NOX absorber outlet] is a concentration of NOx in the exhaust gases at the outlet of the absorber (2), [NH$_3$ stored in the SCR] is a value of surface concentration in the selective catalytic reduction catalyst (3), and T is a temperature of the exhaust gases.

6. The exhaust gas purification device of a motor vehicle according to any one of the preceding claims, **characterized in that** the absorber (2) of nitrogen oxides is of the monolith type.

7. The exhaust gas purification device of a motor vehicle according to any one of the preceding claims, **characterized in that** the absorber (2) of nitrogen oxides is placed in a diesel oxidation catalyst (2).

8. The exhaust gas purification device of a motor vehicle according to any one of the preceding claims, **characterized in that** the selective catalytic reduction catalyst (3) is disposed in a particle filter.

9. The exhaust gas purification device of a motor vehicle according to any one of the preceding claims, **characterized in that** it is configured to implement an estimation model of the quantity of nitrogen oxides emitted by an engine block (1).

10. An internal combustion engine (1, 2, 3, 9) of a motor vehicle, **characterized in that** it includes an exhaust gas purification device (2, 3, 9) according to any one of the preceding claims.

Figure unique

**EP 2 917 529 B1**

## RÉFÉRENCES CITÉES DANS LA DESCRIPTION

**Documents brevets cités dans la description**

* WO 20110083427 A